(19) Europäisches Patentamt / European Patent Office / Office européen des brevets

(11) **EP 4 358 182 A1**

(12) **EUROPEAN PATENT APPLICATION**
published in accordance with Art. 153(4) EPC

(43) Date of publication:
**24.04.2024 Bulletin 2024/17**

(21) Application number: **22949683.1**

(22) Date of filing: **01.08.2022**

(51) International Patent Classification (IPC):
**H01M 4/36** (2006.01)        **H01M 4/525** (2010.01)

(86) International application number:
**PCT/CN2022/109450**

(87) International publication number:
**WO 2024/026621 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **ZHAO, Dong**
  **Ningde, Fujian 352100 (CN)**

• **WU, Qi**
  **Ningde, Fujian 352100 (CN)**
• **SHEN, Chongheng**
  **Ningde, Fujian 352100 (CN)**
• **WANG, Bangrun**
  **Ningde, Fujian 352100 (CN)**
• **CHEN, Qiang**
  **Ningde, Fujian 352100 (CN)**
• **FAN, Jingpeng**
  **Ningde, Fujian 352100 (CN)**

(74) Representative: **Gong, Jinping**
**CocreateIP**
**Neumarkterstr. 21**
**81673 München (DE)**

(54) **MODIFIED LITHIUM-RICH MANGANESE-BASED MATERIAL, MODIFICATION METHOD OF LITHIUM-RICH MANGANESE-BASED MATERIAL, SECONDARY BATTERY, AND ELECTRICAL DEVICE**

(57)     A modified lithium-rich manganese-based material, a modification method of a lithium-rich manganese-based material, a secondary battery and an electrical device are provided. The modified lithium-rich manganese-based material includes a lithium-rich manganese-based material co-doped with anion and cation and a fast ionic conductor material. The lithium-rich manganese-based material has a chemical formula of $xLi_2MnO_3 \bullet (1-x)LiNi_yCo_zMn_aO_2$, where $0<x<1$, $0 \leq y \leq 1$, $0 \leq z \leq 1$, and $y+z+a=1$. A doped cationic element M1 is selected from at least one of a group consisting of Na, Fe, Nb, Ti, Mg, Al, Cr, and Er, and a doped anionic element M2 is selected from at least one of a group consisting of F, Cl, Br, I, S, B, P, N, Se, and Te. The fast ionic conductor material is attached to the lithium-rich manganese-based material co-doped with anion and cation, and is selected from at least one of a group consisting of LATP, LAGP, LLZO, LLTO, $LiBO_2$, $LiAlO_2$, and $LiPO_3$. The first efficiency, cycle stability, thermal stability, rate performance and capacity of the material are improved.

FIG. 1

**Description**

**FIELD**

The present disclosure relates to the field of battery technology, and in particular, to a modified lithium-rich manganese-based material, a modification method of a lithium-rich manganese-based material, a secondary battery, and an electrical device.

**BACKGROUND**

A positive electrode material is the most critical component of lithium-ion batteries. The positive electrode material is the source of $Li^+$ in the lithium-ion batteries, directly determines an energy density of the lithium-ion batteries, and is also an important factor affecting power density, cycle life, and safety performance of the batteries. A lithium-rich manganese-based layered positive electrode material was firstly proposed by Dahn, his colleagues, and Thackeray et al. The lithium-rich manganese-based layered positive electrode material has advantages such as a high discharge specific capacity greater than 250 mAh/g and high energy density, and is regarded as a main material of next generation power batteries.

When the lithium-rich manganese-based material is in a high-voltage charging state above 4.5 V in the first cycle, some lithium ions of the transition metal layer are removed along with oxygen to form $Li_2O$ deintercalation. The resulting crystal vacancies are more difficult to accept lithium ions in the subsequent charge and discharge process, which leads to a reduced first-cycle charge and discharge efficiency of the material. Moreover, the formation of many oxygen vacancies causes migration of transition metal ions and thus rearrangement of the crystal structure, leading to instability of the material structure and thus resulting in poor cycle performance. In addition, the lithium-rich material has a low electronic and ionic conductivity and the side reactions between the electrolytic solution and the surface of the material are exacerbated under the high voltage, and rate performance of the material is thus extremely poor.

**SUMMARY**

The present disclosure provides a modified lithium-rich manganese-based material, a modification method of a lithium-rich manganese-based material, a secondary battery, and an electrical device, to solve a problem of poor rate performance of the lithium-rich manganese-based material.

A first aspect of the present disclosure provides a modified lithium-rich manganese-based material and a fast ionic conductor material. The modified lithium-rich manganese-based material includes a lithium-rich manganese-based material co-doped with anion and cation. The lithium-rich manganese-based material has a chemical formula of $xLi_2MnO_3\bullet(1-x)LiNi_yCo_zMn_aO_2$, where $0<x<1$, $0\leq y\leq1$, $0\leq z\leq1$, and $y+z+a=1$. A doped cation element M1 is selected from at least one of a group consisting of Na, Fe, Nb, Ti, Mg, Al, Cr, and Er, and a doped anion element M2 is selected from at least one of a group consisting of F, Cl, Br, I, S, B, P, N, Se, and Te. The fast ionic conductor material is attached to the lithium-rich manganese-based material co-doped with anion and cation, and is selected from at least one of a group consisting of LATP (lithium titanium aluminum phosphate), LAGP (lithium aluminum germanium phosphate), LLZO (lithium lanthanum zirconate), LLTO (lithium lanthanum titanate), $LiBO_2$ (lithium borate), $LiAlO_2$ (Lithium aluminate), and $LiPO_3$ (lithium metaphosphate).

In the modified lithium-rich manganese-based material of the present disclosure, anion doping mainly replaces sites of oxygen in the lithium-rich manganese-based positive electrode material, which can inhibit excessive oxidation of lattice oxygen at a high potential and alleviate loss of the lattice oxygen. In the first cycle process, the release of oxygen is reduced, the decomposition of the electrolytic solution is alleviated, and the first efficiency of the material is improved. Cation doping mainly replaces sites of transition metal in the lithium-rich manganese-based material, which can stabilize the crystal structure, improve the formation energy of the oxygen vacancies, and inhibit the transformation of the material to a spinel structure during the charge and discharge process, and thus improving cycle stability and thermal stability. The fast ionic conductor material, as the so-called coating layer in this field, can effectively improve the ionic conductivity of the lithium-rich manganese-based material, improve the transmission rate of lithium ions, and improve the rate performance and capacity of the material. Furthermore, the fast ion conductor material has stable properties, which effectively reduces the side reactions between the material and the electrolytic solution under the condition of high potential, improves the storage of the material, and reduces the gas production of the material.

In any embodiment of the first aspect, a doping amount of the doped cation element M1/a doping amount of the doped anion element M2 is 1:(0.3~2), optionally 1:(0.5~1.5), to improve a cooperation effect of anion and cation doping, allowing the cycle performance and first efficiency of the material to be improved to the greatest extent as possible.

In any embodiment of the first aspect, when the doped cationic element M1 is Fe, the doped anionic element M2 is Cl; or when the doped cationic element M1 is Na, the doped anionic element M2 is F. The combination of the above two kinds of anion and cation doping has a particularly outstanding effect on the modification of the lithium-rich manganese-based material.

In any embodiment of the first aspect, a doping amount of the doped cation element M1 is in a range of 1000 ppm to 20000 ppm, optionally 2000 ppm to 10000 ppm, and a doping amount of the doped anion element M2 is in a range of 300 ppm to 40000 ppm, optionally 1000 ppm to 20000 ppm, to further improve the modification effect of anion and cation doping.

In any embodiment of the first aspect, a weight content of the fast ionic conductor material in the modified lithium-rich manganese-based material is in a range of 2000 ppm to 20000 ppm, optionally 2000 ppm to 10000 ppm. The fast ionic conductor material is evenly distributed in the form of islands or dots on the surface of the positive electrode material, effectively improving the conductivity of the lithium-rich manganese-based material.

In any embodiment of the first aspect, the modified lithium-rich manganese-based material has a conductivity in a range of 10 $\mu$S/cm to 60 $\mu$S/cm, preferably 30 $\mu$S/cm to 60 $\mu$S/cm. After the modification of the fast ionic conductor material, the conductivity of the modified lithium-rich manganese-based material increases relative to the lithium-rich manganese-based material co-doped with anion and cation.

In any embodiment of the first aspect, the modified lithium-rich manganese-based material has a specific surface area smaller than 3.2 m2/g, optionally in a range of 0.3 m2/g to 2.2 m2/g. The modified lithium-rich manganese-based material has a relatively small specific surface area, and thus ensuring that the lithium-rich manganese-based material has excellent cycle performance. Optionally, the $D_{V50}$ of the primary particles of the modified lithium-rich manganese-based material is in a range of 100 nm to 300 nm. The $D_{V50}$ of the primary particles of the fast ionic conductor material subsequent to the modification has reduced relative to the lithium-rich manganese-based material co-doped with anion and cation prior to the modification. The specific surface area has become larger, and a channel that is conducive to the diffusion of lithium ions is formed on the surface, which significantly improves the first efficiency and rate performance of the lithium-rich manganese-based material.

In any embodiment of the first aspect, a volume particle size distribution diameter of the modified lithium-rich manganese-based material satisfies $(D_{v90}-D_{v10})/D_{v50} \geq 1.1$, optionally satisfying $(D_{v90}-D_{v10})/D_{v50} \geq 1.2$. Optionally, a powder compacted density of the modified lithium-rich manganese-based material at a pressure of 5 tons is greater than or equal to 3.0 g/cc. When the modified lithium-rich manganese-based material has a relatively large diameter and/or a relatively large compacted density, the modified lithium-rich manganese-based material has a relatively high volume energy density.

In any embodiment of the first aspect, in an X-ray diffraction spectrum of the modified lithium-rich manganese-based material, a peak area ratio of I003/I104 is in a range of 1.0 to 1.2, optionally 1.05 to 1.15, and a peak area ratio of I020/(I003+I104) is in a range of 0.005 to 0.05, optionally 0.008 to 0.02. The peak area ratio of I003/I104 is controlled within the above range, indicating that the mixing arrangement degree of lithium and nickel in the material is low and the structural stability is good. The peak area ratio of I020/(I003+I104) is controlled within the above range, indicating that the lithium-rich phase is controlled in a superior ratio, allowing the material to have better first efficiency and cycle performance.

In any embodiment of the first aspect, a 003 characteristic peak and a 104 characteristic peak of the modified lithium-rich manganese-based material are shifted to left relative to a -003 characteristic peak and a 104 characteristic peak of the lithium-rich manganese-based material, indicating that a spacing between the lithium layers and unit cell volume are increased by anion and cation doping, which is more conducive to ion diffusion.

A second aspect of the present disclosure provides a modification method of a lithium-rich manganese-based material. The modification method includes: obtaining a lithium-rich manganese-based material co-doped with anion and cation by performing a first sintering on a first mixture, the first mixture including a lithium-rich manganese-based precursor, a lithium salt, a substance containing a cation element M1, and a substance containing an anion element M2, and the lithium-rich manganese-based material having a chemical formula of $xLi_2MnO_3 \bullet (1-x)LiNi_yCo_zMn_aO_2$, where $0<x<1$, $0 \leq y \leq 1$, $0 \leq z \leq 1$, and $y+z+a=1$; and obtaining a modified lithium-rich manganese-based material by performing a second sintering on a second mixture, the second mixture including a fast ionic conductor material and the lithium-rich manganese-based material co-doped with anion and cation, and the modified lithium-rich manganese-based material including the lithium-rich manganese-based material co-doped with anion and cation and the fast ionic conductor material. The cation element M1 is selected from at least one of a group consisting of Na, Fe, Nb, Ti, Mg, Al, Cr, and Er, the anion element M2 is selected from at least one of a group consisting of F, Cl, Br, I, S, B, P, N, Se, and Te, and a mass ratio of the cation element M1 to the anion element M2 is 1:(0.3~2). The fast ionic conductor material is selected from at least one of a group consisting of LATP (lithium titanium aluminum phosphate), LAGP (lithium aluminum germanium phosphate), LLZO (lithium lanthanum zirconate), LLTO (lithium lanthanum titanate), $LiBO_2$ (lithium borate), $LiAlO_2$ (Lithium aluminate), and $LiPO_3$ (lithium metaphosphate).

In the modification method of the present disclosure, in particular, the fast ionic conductor material directly adopts the solid phase method to realize its coating on the lithium-rich manganese-based material co-doped with anion and cation. Compared with the in-situ coating method, the coating method of the present disclosure is simple and easy to carry out, and has high efficiency and low cost. There are no strict requirements for the coating temperature, and it is easy to achieve large-scale production. The fast ionic conductor material is distributed in an island-shape or point-shape manner on the surface of the positive electrode material. The modified lithium-rich manganese-based material has a regular morphology, high crystallinity, a relatively high capacity, an excellent rate, and excellent cycle performance. Moreover, the fast ionic conductor material has stable properties, which effectively reduces the side reactions between the material and the electrolytic solution at a high potential, improves the storage of the material, and reduces the gas production of the material.

In any embodiment of the second aspect, the lithium-rich manganese-based precursor has a chemical formula of $Ni_bCo_cMn_{1-b-c}(OH)_2$, where $0.05 \geq c \geq 0$ and $0.4 \geq b > 0$. Optionally, the lithium salt is at least one of lithium hydroxide, lithium carbonate, or lithium acetate. Optionally, a molar ratio of a sum of transition metal elements in the lithium-rich manganese-based precursor to lithium of the lithium salt is 1:(1.1~1.8), preferably 1:(1.1~1.5). The above lithium-rich manganese-based precursor has a relatively high Mn content and a relatively low Co content, which is beneficial to reducing raw material costs.

In any embodiment of the second aspect, the substance containing the cation element M1 is an oxide of M1 or a salt of M1, and optionally, the substance containing the anionic element M2 is a monomer, a salt, or an organic substance. Each of the above substances comes from a wide range of sources and has low cost.

In any embodiment of the second aspect, a mass ratio of the cation element M1 of the substance containing the cation element M1 relative to the lithium-rich manganese-based material is in a range of 1000 ppm to 20000 ppm, and further optionally 2000 ppm to 10000 ppm. Optionally, a mass ratio of the anion element M2 of the substance containing the anion element M2 relative to the lithium-rich manganese-based material is in a range of 300 ppm to 40000 ppm, and further optionally 1000 ppm to 20000 ppm. By controlling the above mass ratios, the doping amounts of anion and cation have a cooperation effect within a preset range.

In any embodiment of the second aspect, a mass ratio of the fast ionic conductor relative to the lithium-rich manganese-based material co-doped with anion and cation is in a range of 2000 ppm to 20000 ppm, optionally 2000 ppm to 10000 ppm, to achieve an efficient and appropriate coating on the core.

In any embodiment of the second aspect, the first sintering includes a first-stage sintering process and a second-stage sintering process. A sintering temperature of the first-stage sintering process is in a range of 400°C to 600°C, and a heat preservation time of the first-stage sintering process is in a range of 4 h to 8 h. A sintering temperature of the second-stage sintering process is in a range of 800°C to 1000°C, and a heat preservation time of the second-stage sintering process is in a range of 10 h to 20 h. By utilizing the above two stages of sintering, the lithium-rich manganese-based material co-doped with anion and cation obtained subsequent to the sintering has a high crystallinity and a low content of spinel heterogeneous phase.

In any embodiment of the second aspect, in the second sintering, a sintering temperature is in a range of 500°C to 700°C, and a heat preservation time is in a range of 4 h to 8 h, which further optimizes the uniformity and firmness of the coating of the fast ionic conductor material.

A third aspect of the present disclosure provides a secondary battery including a positive electrode plate, a separator, and a negative electrode plate. The positive electrode plate includes a positive electrode film layer, which includes a positive electrode active material. The positive electrode active material includes the above modified lithium-rich manganese-based material or the modified lithium-rich manganese-based material obtained by the above modification method. The secondary battery provided by the present disclosure has high first efficiency, good cycle performance and rate performance, and low gas production.

A third aspect of the present disclosure provides an electrical device including a secondary battery. The secondary battery is selected from the above secondary battery. The electrical device having the secondary battery of the present disclosure has better electrical performance and more stable operation.

## BRIEF DESCRIPTION OF THE DRAWINGS

In order to clearly illustrate technical solutions of embodiments of the present disclosure, brief description of drawings used in embodiments of the present disclosure is provided below. Obviously, the drawings in the following description are only part of embodiments of the present disclosure, and those skilled in the art can obtain other drawings based on these drawings without creative effort.

FIG. 1 is a scanning electron micrograph of primary particles of a lithium-rich manganese-based positive electrode material co-doped with anion and cation before and after being coated with LATP in Embodiment 1.

FIG. 2 is an XRD diffraction spectrum of the lithium-rich manganese-based positive electrode material co-doped with anion and cation after being coated with LATP in Embodiment 1.

FIG. 3 is an XRD diffraction spectrum of locale 003 and 104 diffraction peaks of the lithium-rich manganese-based positive electrode material before and after being co-doped with anion and cation in Embodiment 1.

FIG. 4 is a schematic diagram of a secondary battery according to an embodiment of the present disclosure.

FIG. 5 is an exploded view of the secondary battery according to the embodiment of the present disclosure shown in FIG. 4.

FIG. 6 is a schematic diagram of a battery module according to an embodiment of the present disclosure.

FIG. 7 is a schematic diagram of a battery pack according to an embodiment of the present disclosure.

FIG. 8 is an exploded view of the battery pack according to the embodiment of the present disclosure shown in FIG. 7.

FIG. 9 is a schematic diagram of an electrical device using a secondary battery as a power source according to an embodiment of the present disclosure.

In the drawings, the drawings are not drawn to actual scale.

Description of reference signs:

1 battery pack; 2 upper box body; 3 lower box body; 4 battery module; 5 secondary battery; 51 casing; 52 electrode assembly; 53 top cover assembly.

## DETAILED DESCRIPTION

The embodiments of the present disclosure will be described in further detail below with reference to the accompanying drawings and embodiments. The detailed description of the following embodiments and the accompanying drawings are used to illustrate the principles of the present disclosure, but cannot be used to limit the scope of the present disclosure, that is, the present disclosure is not limited to the described embodiments.

Embodiments of a modified lithium-rich manganese-based material, a modification method of a lithium-rich manganese-based material, a secondary battery and an electrical device of the present disclosure are described in detail below with appropriate reference to the detailed description of the accompanying drawings. However, there may be cases where unnecessary detailed description is omitted. For example, detailed descriptions of well-known matters and repeated descriptions of practically identical structures are omitted. This is to avoid making the following description unnecessarily lengthy to facilitate understanding for those skilled in the art. In addition, the drawings and the following description are provided to enable those skilled in the art to fully understand the present application and are not intended to limit the subject matter recited in the claims.

The "ranges" disclosed herein are defined in terms of lower and upper limits, a given range is defined by selecting a lower limit and an upper limit, and the selected lower and upper limits defines boundaries of a particular range. Ranges defined in this manner may or may not include end values and may be arbitrarily combined, i.e., any lower limit may be combined with any upper limit to form a range. For example, if ranges of 60 to 120 and 80 to 110 are listed for a particular parameter, it is understood that ranges of 60 to 110 and 80 to 120 are also contemplated. In addition, if listed minimum range values are 1 and 2 and if listed maximum range values are 3, 4, and 5, the following ranges are all conceivable: 1 to 3, 1 to 4, 1 to 5, 2 to 3, 2 to 4, and 2 to 5. In the present application, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully included herein, and "0 to 5" is merely a shorthand representation of combinations of these numbers. In addition, when it is stated that a certain parameter is an integer equal to or greater than 2, it is equivalent to disclosing that the parameter is, e.g., an integer of 2, 3, 4, 5, 6, 7, 8, 9, 10, 11, 12, etc.

All embodiments and alternative embodiments of the present application may be combined with each other to form a new technical solution if not specifically stated.

Unless otherwise specified, all the technical features and optional technical features of the present application may be combined with each other to form a new technical solution.

Unless otherwise specified, all steps of the present application may be performed sequentially or may be performed randomly, preferably sequentially. For example, the process includes steps (a) and (b), meaning that the process may include steps (a) and (b) performed sequentially, or may include steps (b) and (a) performed sequentially. For example, the process may further include step (c), meaning that step (c) may be added to the process in any order, e.g., the process may include steps (a), (b), and (c), include steps (a), (c), and (b), or include steps (c), (a), and (b) or the like.

If not specifically stated, "including" and "incorporating" described herein are intended to be open-ended as well as closed-ended. For example, "including" and "comprising" may mean that other components not listed may be included or incorporated, or that only listed components may be included or incorporated.

In the present application, the term "or" is inclusive if not specifically stated. For example, a phrase "A or B" means "A, B, or both A and B". More specifically, a condition of "A or B" is satisfied by any one of the following conditions: A is true (or present) and B is false (or not present); A is false (or absent) and B is true (or present); or both A and B are true (or present).

[Modified Lithium-rich Manganese-based Material]

A first aspect of the present disclosure provides a modified lithium-rich manganese-based material, which includes a lithium-rich manganese-based material co-doped with anion and cation and a fast ionic conductor material that is attached to the lithium-rich manganese-based material co-doped with anion and cation. The lithium-rich manganese-based material has a chemical formula of $xLi_2MnO_3 \cdot (1-x)LiNi_yCo_zMn_aO_2$, where $0<x<1$, $0 \leq y \leq 1$, $0 \leq z \leq 1$, and $y+z+a=1$. The doped cation element M1 is selected from at least one of a group consisting of Na, Fe, Nb, Ti, Mg, Al, Cr, and Er, and the doped anion element M2 is selected from at least one of a group consisting of F, Cl, Br, I, S, B, P, N, Se, and Te. The fast ionic conductor material is selected from at least one of a group consisting of LATP (lithium titanium aluminum phosphate), LAGP (lithium aluminum germanium phosphate), LLZO (lithium lanthanum zirconate), LLTO (lithium lanthanum titanate), $LiBO_2$ (lithium borate), $LiAlO_2$ (Lithium aluminate), and $LiPO_3$ (lithium metaphosphate).

In the modified lithium-rich manganese-based material of the present disclosure, anion doping mainly replaces sites of oxygen in the lithium-rich manganese-based positive electrode material, which can inhibit excessive oxidation of lattice oxygen at a high potential and alleviate loss of the lattice oxygen. In the first cycle process, the release of oxygen is reduced, the decomposition of the electrolytic solution is alleviated, and the first efficiency of the material is improved. Cation doping mainly replaces sites of transition metal in the lithium-rich manganese-based material, which can stabilize the crystal structure, improve the formation energy of the oxygen vacancies, further alleviate the loss of the lattice oxygen, and inhibit the transformation of the material to a spinel structure during the charge and discharge process, and thus improving cycle stability and thermal stability. The fast ionic conductor material, as the so-called coating layer in this field, can effectively improve the ionic conductivity of the lithium-rich manganese-based material, improve the transmission rate of lithium ions, and improve the rate performance and capacity of the material. Furthermore, the fast ion conductor material has stable properties, which effectively reduces the side reactions between the material and the electrolytic solution under the condition of high potential, improves the storage of the material, and reduces the gas production of the material.

The doping amounts of the above anion and cation have their respective effects. In some embodiments, a doping amount of M1/a doping amount of M2 is 1:(0.3~2), optionally 1:(0.5~1.5), to improve a synergistic effect of anion and cation doping, allowing the cycle performance and first efficiency of the material to be improved to the greatest extent as possible. In some embodiments, the doping amount of M1/the doping amount of M2 is 1:0.3, 1:0.5, 1:0.8, 1:1, 1:1.2, 1:1.5, or 1:2.

The above doped anion and cation elements can alleviate the loss of lattice oxygen and increase the formation energy of oxygen vacancies, but their respective effects vary due to different element compositions and properties. For example, when the doped cation element M1 is Fe, the doped anion element M2 is Cl. Alternatively, when the doped cation element M1 is Na, the doped anion element M2 is F. The main reason is that Cl and F have a stronger binding force on the transition metal elements than O, which can reduce the solubility of the transition metal elements in the electrolytic solution, stabilize the structure of the lithium-rich manganese-based material, and reduce the release of oxygen from the material. In addition, the doping of Cl and F can further reduce the average valence state of the transition metal, and the reversible capacity of the battery can be increased. Na and Fe occupy the transition metal layer and have a relatively strong binding energy with O, which further alleviate the loss of lattice oxygen. Fe can undergo the transition from $Fe^{3+}$ to $Fe^{4+}$ during the charge and discharge cycle, to further enhance the capacity of the material. Therefore, the reinforcing effect is respectively performed on the transition metal layer and the oxygen layer of the material by the specific combination of Fe and Cl and the specific combination of Na and F, which is particularly effective for the modification of the lithium-rich manganese-based material.

The cation element M1 and the anionic element M2 are used as doping elements, and on the basis of ensuring that the basic lattice structure of the lithium-rich manganese-based material is not affected, increase in the doping amount is conducive to improving the mitigating effect on the lattice oxygen loss. Moreover, in order to further ensure that there are sufficient oxygen vacancies to satisfy the need for rapid deintercalation of lithium ions. In some embodiments, the above doping amount of the doped cationic element M1 is in a range of 1000 ppm to 20000 ppm, optionally 2000 ppm to 10000 ppm, such as 1000 ppm, 2000 ppm, 5000 ppm, 8000 ppm, 10000 ppm, 12000 ppm, 15000 ppm, 18000 ppm, or 20000 ppm; the doping amount of the doped anionic element M2 is in a range of 300 ppm to 40000 ppm, optionally 1000 ppm to 20000 ppm, such as 300 ppm, 500 ppm, 800 ppm, 1000 ppm, 1500 ppm, 2000 ppm, 5000 ppm, 8000 ppm, 10000 ppm, 20000 ppm, or 40000 ppm, to further improve the modification effect of anion and cation doping.

In some embodiments, a weight content of the fast ionic conductor material in the modified lithium-rich manganese-based material is in a range of 2000 ppm to 20000 ppm, optionally 2000 ppm to 10000 ppm, such as 2000 ppm, 5000 ppm, 8000 ppm, 10000 ppm, 15000 ppm, or 20000 ppm. The fast ionic conductor material is evenly distributed in the form of islands or dots on the surface of the positive electrode material, effectively improving the conductivity of the lithium-rich manganese-based material.

The morphology type of the modified lithium-rich manganese-based material is preferably a secondary sphere, a single crystal, or a single crystal-like crystal. It was found in the experiment that after the lithium-rich manganese-based material co-doped with anion and cation is modified by coating the fast ionic conductor material, the particle size of primary particles of the lithium-rich manganese-based material is reduced and the specific surface area is increased. For example, a specific surface area of a material before coating the fast ionic conductor material, i.e., the lithium-rich manganese-based material co-doped with anion and cation, is smaller than 3.0 $m^2/g$, optionally in a range of 0.1 $m^2/g$ to 2 $m^2/g$. The particle size is preferably in a range of 1 $\mu$m to 20 $\mu$m, optionally 3 $\mu$m to 15 $\mu$m, and a thickness of the primary particles is in a range of 300 nm to 500 nm. The specific surface area of the modified lithium-rich manganese-based material obtained after being coated with the fast ionic conductor material is smaller than 3.2 $m^2/g$, and optionally in a range of 0.3 $m^2/g$ to 2.2 $m^2/g$. The modified lithium-rich manganese-based material has a relatively small specific surface area, and thus ensuring that the lithium-rich manganese-based material has excellent cycle performance. Optionally, the thickness of the primary particles of the modified lithium-rich manganese-based material is in a range of 100 nm to 300 nm. The thickness of the primary particles of the fast ionic conductor material after the modification has been reduced relative to that of the lithium-rich manganese-based material co-doped with anion and cation before the modification. The specific surface area has become larger, and a channel that is conducive to diffusion of lithium ions is formed on the surface, which significantly improves the first efficiency and rate performance of the lithium-rich manganese-based material.

The specific surface area has a well-known meaning in the art, and may be measured by methods known in the art. For example, the specific surface area may be measured by a nitrogen adsorption specific surface area analysis test method with reference to GB/T 19587-2017 and calculated by the Brunauer Emmett Teller (BET) method. The nitrogen adsorption specific surface area analysis test may be carried out by a Tri-Star 3020 specific surface area pore size analysis tester of the U.S. Micromeritics company.

In some embodiments, a volume particle size distribution diameter of the modified lithium-rich manganese-based material satisfies $(D_{v90}-D_{v10})/D_{v50} \geq 1.1$, optionally satisfying $(D_{v90}-D_{v10})/D_{v50} \geq 1.2$. Optionally, a powder compacted density of the modified lithium-rich manganese-based material at a pressure of 5 tons is equal to or greater than 3.0 g/cc. When the modified lithium-rich manganese-based material has a relatively large diameter and/or a relatively large compacted density, the modified lithium-rich manganese-based material has a relatively high volume energy density. $D_{v50}$ refers to a particle size corresponding to 50% of the volume distribution, $D_{v10}$ refers to a particle size corresponding to 10% of the volume distribution, and $D_{v90}$ refers to a particle size corresponding to 90% of the volume distribution. As an example, $D_{v50}$ may be conveniently measured by a laser particle size analyzer, such as an Mastersizer 2000E laser particle size analyzer of Malvern Instruments Co., Ltd. in the UK, with reference to the GB/T 19077-2016 particle size distribution laser diffraction method.

When the modified lithium-rich manganese-based material has the above doping elements, its crystal structure also changes to a certain extent compared to the crystal structure prior to the doping. In some embodiments, in an X-ray diffraction spectrum of the modified lithium-rich manganese-based material, a peak area ratio of I003/I104 is in a range of 1.0 to 1.2, optionally 1.05 to 1.15, and a peak area ratio of I020/(I003+I104) is in a range of 0.005 to 0.05, optionally 0.008 to 0.02. The peak area ratio of I003/I104 is controlled within the above range, indicating that the degree of mixing arrangement of lithium and nickel in the material is low and the structural stability is good. The peak area ratio of I020/(I003+I104) is controlled within the above range, indicating that the lithium-rich phase is controlled in a superior ratio, allowing the material to have better first efficiency and cycle performance.

In any embodiment of the first aspect, a 003 characteristic peak and a 104 characteristic peak of the modified lithium-rich manganese-based material are shifted to left relative to a 003 characteristic peak and a 104 characteristic peak of the lithium-rich manganese-based material, indicating that a unit cell volume a spacing between the lithium layers are increased by the anion and cation doping, which is more conducive to ion diffusion.

A further embodiment of the present disclosure provides a modification method of a lithium-rich manganese-based material, which includes step S1 and step S2.

At step S1, a first sintering is performed on a first mixture, which includes a lithium-rich manganese-based precursor, a lithium salt, a substance containing a cationic element M1, and a substance containing an anionic element M2, to obtain a lithium-rich manganese-based material co-doped with anion and cation. The lithium-rich manganese-based material has a chemical formula of $xLi_2MnO_3 \cdot (1-x)LiNi_yCo_zMn_aO_2$, where $0<x<1$, $0 \leq y \leq 1$, $0 \leq z \leq 1$, and $y+z+a=1$. The cationic element M1 is selected from at least one of a group consisting of Na, Fe, Nb, Ti, Mg, Al, Cr, and Er, the anionic element M2 is selected from at least one of a group consisting of F, Cl, Br, I, S, B, P, N, Se, and Te, and a mass ratio of the cationic element M1 to the anionic element M2 is 1:(0.3~2).

At step S2, a second sintering is performed on a second mixture, which includes a fast ionic conductor material and the lithium-rich manganese-based material co-doped with anion and cation, to obtain a modified lithium-rich manganese-based material that includes the lithium-rich manganese-based material co-doped with anion and cation and the fast ionic conductor material. The fast ionic conductor material is selected from at least one of a group consisting of LATP (lithium titanium aluminum phosphate), LAGP (lithium aluminum germanium phosphate), LLZO (lithium lanthanum zirconate), LLTO (lithium lanthanum titanate), $LiBO_2$ (lithium borate), $LiAlO_2$ (Lithium aluminate), and $LiPO_3$ (lithium metaphosphate).

In the modification method of the present disclosure, in particular, the fast ionic conductor material directly adopts the solid phase method to realize its coating on the lithium-rich manganese-based material co-doped with anion and cation. Compared with the in-situ coating method, the coating method of the present disclosure is simple and easy to carry out, and has high efficiency and low cost. There are no strict requirements for the coating temperature, and it is easy to achieve large-scale production. The fast ionic conductor material is distributed in an island-shape or point-shape manner on the surface of the positive electrode material. The modified lithium-rich manganese-based material has a regular morphology, high crystallinity, a relatively high capacity, an excellent rate, and excellent cycle performance. Moreover, the fast ionic conductor material has stable properties, which effectively reduces the side reactions between the material and the electrolytic solution at a high potential, improves the storage of the material, and reduces the gas production of the material.

In some embodiments, the lithium-rich manganese-based precursor has a chemical formula of $Ni_bCo_cMn_{1-b-c}(OH)_2$, where $0.05 \geq b \geq 0$ and $0.4 \geq c > 0$. The above lithium-rich manganese-based precursor has a relatively high Mn content and a relatively low Co content, which is beneficial to reduce raw material cost. The lithium salt used for the above modification method may be a lithium salt commonly used in the field for preparing lithium positive electrode materials. Optionally, the lithium salt is at least one of lithium hydroxide, lithium carbonate, or lithium acetate, in order to save costs. In order to further increase the lithium content in the obtained lithium-rich manganese-based material, in some embodiments, a molar ratio of a sum of transition metal elements in the lithium-rich manganese-based precursor to lithium in the lithium salt is controlled to be 1:(1.1~1.8), preferably 1:(1.1~1.5).

The above cation element M1 and anion element M2 may be obtained from various kinds of known substances with relatively stable properties. In some embodiments, the substance containing the cation element M1 is an oxide or a salt of M1. Optionally, the substance containing the anion element M2 is a monomer, a salt, or an organic substance. Each of the above substances comes from a wide range of sources and has low cost.

In some embodiments, a mass ratio of M1 in the substance containing the cation element M1 to the lithium-rich manganese-based material is in a range of 1000 ppm to 20000 ppm, and further optionally 2000 ppm to 10000 ppm. Optionally, a mass ratio of M2 in the substance containing anion element M2 to the lithium-rich manganese-based material is in a range of 300 ppm to 40000 ppm, and further optionally 1000 ppm to 20000 ppm. The doping amounts of anion and cation have a cooperation effect within a preset range by controlling the above mass ratios.

In some embodiments, a mass ratio of the fast ionic conductor to the lithium-rich manganese-based material co-doped with anion and cation is in a range of 2000 ppm to 20000 ppm, optionally 2000 ppm to 10000 ppm, to achieve efficient and appropriate coating on the core.

The above processes of the first sintering and the second sintering may refer to the sintering process commonly used in the preparation of the lithium-rich manganese-based material in the related art, such as sintering in air or sintering in an oxygen-rich gas.

In some embodiments, in order to allow the doped anion and cation to enter the crystal lattice as stably as possible and ensure a lithium-rich manganese-based layered structure, the first sintering includes a first-stage sintering process and a second-stage sintering process. In the first-stage sintering process, a sintering temperature is in a range of 400°C to 600°C, and a heat preservation time is in a range of 4 h to 8 h. In the second-stage sintering process, a sintering temperature is in a range of 800°C to 1000°C, and a heat preservation time is in a range of 10 h to 20 h. By utilizing the above two stages of the sintering, the lithium-rich manganese-based material co-doped with anion and cation obtained after sintering has a high crystallinity and a low content of spinel heterogeneous phase.

In some embodiments, in the second-stage sintering, a sintering temperature is in a range of 500°C to 700°C, and a heat preservation time is in a range of 4 h to 8 h, which further optimizes the uniformity and firmness of the coating of the fast ionic conductor material.

[Secondary Battery]

A secondary battery, also referred to as a rechargeable battery or a storage battery, refers to a battery that may be continuously used by activating an active material by charging after the battery is discharged.

Generally, a secondary battery includes a positive electrode plate, a negative electrode plate, a separator, and an electrolytic solution. During charging and discharging of the battery, active ions, such as lithium ions, are intercalated and deintercalated between the positive electrode plate and the negative electrode plate. The separator is arranged between the positive electrode plate and the negative electrode plate, and mainly functions to prevent the positive and negative electrodes from being short-circuited while enabling the active ions to pass therethrough. The electrolytic solution between the positive electrode plate and the negative electrode plate mainly serves to conduct active ions.

[Positive Electrode Plate]

The positive electrode plate typically includes a positive electrode current collector and a positive electrode film layer disposed on at least one surface of the positive electrode current collector, and the positive electrode film layer includes a positive electrode active material.

As an example, the positive electrode current collector has two surfaces opposite to each other in a thickness direction thereof, and the positive electrode film layer is disposed on one or both of the two opposite surfaces of the positive electrode current collector.

In some embodiments, the positive electrode current collector may be a metal foil or a composite current collector. For example, the metal foil is an aluminum foil. The composite current collector may include a macromolecular material base-layer and a metal layer formed on at least one surface of the macromolecular material base-layer. The composite current collector may be formed by forming a metal material (such as, aluminum, aluminum alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

The positive electrode active material in the secondary battery of the present disclosure includes a modified lithium-rich manganese-based material of any one of the above embodiments or a modified lithium-rich manganese-based material obtained by the modification method of any one of the above embodiments. Based on the modified lithium-rich manganese-based material of the present disclosure, the secondary battery has a high first efficiency, good cycle performance and rate performance, and low gas production.

In some embodiments, the positive electrode active material is a positive electrode active material for a battery known in the field. As an example, the positive electrode active material includes at least one of lithium-containing phosphate of an olivine structure, lithium transition metal oxide, or respective modified compounds thereof. However, the present disclosure is not limited to these materials, and other traditional materials that may be used as positive electrode active materials of the battery may be used. These positive electrode active materials may be used alone or in combinations of two or more. Examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$, which may be referred to as $NCM_{333}$), $LiNi_{0.5}Co_{0.2}Mn_{0.3}O_2$ (which may be referred to as $NCM_{523}$), $LiNi_{0.5}Co_{0.25}Mn_{0.25}O_2$ (which may be referred to as $NCM_{211}$), $LiNi_{0.6}Co_{0.2}Mn_{0.2}O_2$ (which may be referred to as $NCM_{622}$), $LiNi_{0.8}Co_{0.1}Mn_{0.1}O_2$ (which may be referred to as NCMsn), lithium nickel cobalt aluminum oxide (e.g., $LiNi_{0.85}Co_{0.15}Al_{0.05}O_2$), or modified compound thereof. Examples of the lithium-containing phosphate of olivine structure may include, but are not limited to, at least one of lithium iron phosphate (such as $LiFePO_4$, which may be referred to as LFP), a composite material of lithium iron phosphate and carbon, lithium manganese phosphate (such as $LiMnPO_4$), a composite material of lithium manganese phosphate and carbon, lithium iron manganese phosphate, or a composite material of lithium iron manganese phosphate and carbon.

In some embodiments, the positive electrode film layer further optionally includes a binding agent. As an example, the binding agent may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, or carbon nanofibers.

In some embodiments, the positive electrode plate is prepared by the conventional ways below. The above components for preparing the positive electrode plate, such as the positive electrode active material, the conductive agent, the binding agent, and any other components, are dispersed in a solvent (e.g., N-methylpyrrolidone) to form positive electrode slurry. The positive electrode slurry is then coated on the positive electrode current collector, and the positive electrode plate is obtained after drying, cold pressing and other processes.

[Negative Electrode Plate]

The negative electrode plate includes a negative electrode current collector and a negative electrode film layer disposed on at least one surface of the negative electrode current collector. The negative electrode film layer includes a negative electrode active material.

As an example, the negative electrode current collector has two surfaces opposite to each other in a thickness direction thereof, and the negative electrode film layer is disposed on one or both of the two opposite surfaces of the negative electrode current collector.

In some embodiments, the negative electrode current collector may be a metal foil or a composite current collector. For example, the metal foil is a copper foil. The composite current collector may include a macromolecular material base-layer and a metal layer formed on at least one surface of the macromolecular material base-material. The composite current collector may be formed by forming a metal material (such as, copper, copper alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the negative electrode active material may be a negative electrode active material for batteries known in this art. As an example, the negative electrode active material may include at least one of artificial graphite, natural graphite, soft carbon, hard carbon, silicon-based materials, tin-based materials, or lithium titanate. The silicon-based material may be selected from at least one of a group consisting of elemental silicon, silicon oxides, silicon carbon compounds, silicon nitrogen compounds, and silicon alloys. The tin-based material may be selected from at least one of a group consisting of elemental tin, tin oxides, and tin alloys. However, the present disclosure is not limited to these materials, and other conventional materials that can be used as a negative electrode active material for a battery can also be used. These negative electrode active materials may be used alone or in combination of two or more.

In some embodiments, the negative electrode film layer further optionally includes a binding agent. The binding agent may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from one or more of superconducting carbon, acetylene black, carbon black, Ketjen black, carbon dots, carbon nanotubes, graphene, and carbon nanofibers.

In some embodiments, the negative electrode film layer may optionally include other additives, such as a thickening agent, e.g., sodium carboxymethyl cellulose (CMC-Na).

In some embodiments, the negative electrode plate is prepared as follows. The above components for preparing the negative electrode plate, such as the negative electrode active material, the conductive agent, the binding agent, and any other components, are dispersed in a solvent (for example, deionized water) to form negative electrode slurry. The negative electrode slurry is then coated on the negative electrode current collector, and the negative electrode plate is obtained after drying, cold pressing and other processes.

[Electrolyte]

The electrolyte functions to conduct ions between the positive electrode plate and the negative electrode plate. The present disclosure has no specific limitation on the type of the electrolyte, which can be selected according to requirements. For example, the electrolyte may be in a liquid state, a gel state, or an all-solid state.

In some embodiments, the electrolyte is electrolytic solution. The electrolytic solution includes electrolyte salt and a solvent.

In some embodiments, the electrolyte salt may be selected from one or more of lithium hexafluorophosphate, lithium tetrafluoroborate, lithium perchlorate, lithium hexafluoroarsenate, lithium bis (fluorosulfonyl) imide, lithium bis (trifluoromethanesulfonyl) imide, lithium difluorophosphate, lithium difluoro(oxalato)borate, lithium bis(oxalate) borate, lithium difluorobisoxalato phosphate, and lithium tetrafluorooxalate phosphate.

In some embodiments, the solvent may include at least one selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, methyl ethyl sulfone, and diethyl sulfone.

In some embodiments, the electrolytic solution further optionally includes an additive. As an example, the additive may include a negative electrode film-forming additive and a positive electrode film-forming additive, and may further include additives capable of improving performance of the battery, such as additives for improving overcharge performance of the battery and additives for improving high-temperature or low-temperature performance of the battery.

[Separator]

In some embodiments, the secondary battery further includes an isolation film. The type of the isolation film is not particularly limited in the present disclosure, and may be any well-known isolation film with a porous structure that has good chemical stability and mechanical stability.

In some embodiments, a material of the isolation film may be selected from at least one of glass fiber, non-woven fabric, polyethylene, polypropylene, and polyvinylidene fluoride. The isolation film may be a single-layer film or may be a multilayer composite film, which is not particularly limited. When the isolation film is a multilayer composite film, materials of the layers may be the same or different, which is not particularly limited.

In some embodiments, the positive electrode plate, the negative electrode plate and the isolation film is made into an electrode assembly by means of a winding process or a lamination process.

In some embodiments, the secondary battery may include an outer package. The outer package is configured to package the above electrode assembly and the electrolyte.

In some embodiments, the outer package of the secondary battery may be a hard housing, such as a hard plastic housing, an aluminum housing, and a steel housing. The outer package of the secondary battery may be a soft package, such as a bag-type soft package. A material of the soft package may be plastic, such as polypropylene, polybutylene terephthalate, and polybutylene succinate.

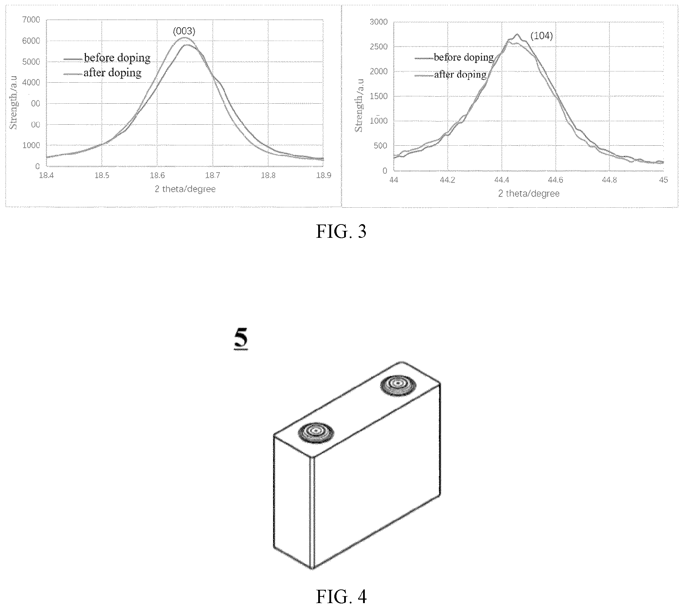

The shape of the secondary battery is not particularly limited in the present disclosure, and may be cylindrical, square, or any other shape. For example, FIG. 4 illustrates a secondary battery 5 having a square structure as an example.

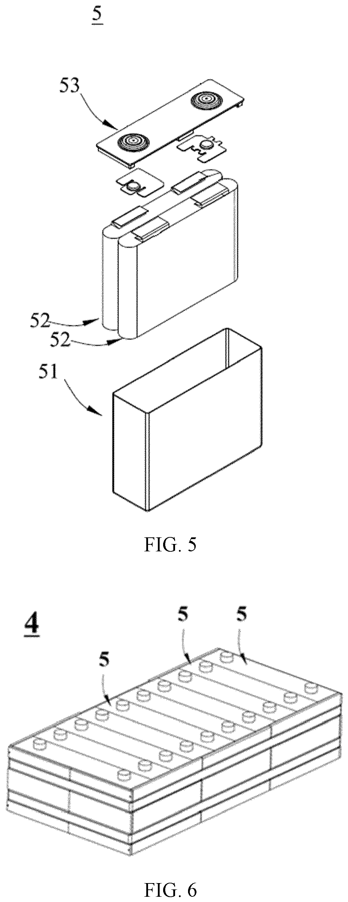

In some embodiments, referring to FIG. 5, the outer package includes a casing 51 and a cover plate 53. The casing 51 includes a bottom plate and a side plate connected to the bottom plate, and the bottom plate and the side plate enclose an accommodating cavity. The casing 51 has an opening in communication with the accommodating cavity, and the cover plate 53 can cover the opening to enclose the accommodating cavity. The positive electrode plate, the negative electrode plate and the isolation film forms an electrode assembly 52 through a winding process or a lamination process. The electrode assembly 52 is enclosed in the accommodating cavity. The electrolyte is immersed in the electrode assembly 52. The secondary battery 5 may include one or more electrode assemblies 52, and those skilled in the art can select according to specific actual requirements.

In some embodiments, the secondary battery may be assembled into a battery module, and the battery module may include one or more secondary batteries, the specific number of which can be selected by those skilled in the art according to the application and a capacity of the battery module.

FIG. 6 illustrates a battery module 4 as an example. Referring to FIG. 6, a plurality of secondary batteries 5 of the battery module 4 is sequentially arranged along a length direction of the battery module 4. Alternatively, the secondary batteries may be arranged in any other manner. The plurality of secondary batteries 5 can be further fixed by fasteners.

Alternatively, the battery module 4 may further include a shell having an accommodating space, and the plurality of secondary batteries 5 is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

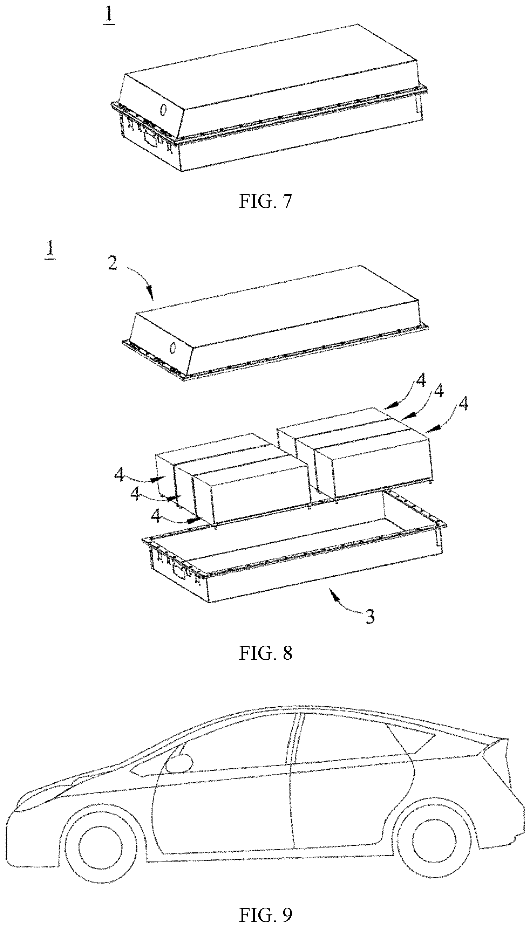

FIG. 7 and FIG. 8 show a battery pack 1 as an example. Referring to FIG. 7 and FIG. 8, the battery pack 1 includes a battery box and a plurality of battery modules 4 provided in the battery box. The battery box includes an upper box body 2 and a lower box body 3, and the upper box body 2 can cover the lower box body 3 to form a closed space for accommodating the battery module 4. The plurality of battery modules 4 may be arranged in the battery box in any manner.

In addition, the present disclosure further provides an electrical device, and the electrical device includes at least one of the secondary battery, the battery module, or the battery pack according to the present disclosure. The secondary battery, the battery module or the battery pack may be used as a power supply for the electrical device, or may be used as an energy storage unit of the electrical device. The electrical device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The electrical device may select the secondary battery, the battery module, or the battery pack according to use requirements thereof.

FIG. 9 illustrates an electrical device as an example. The electrical device is a pure electric vehicle, a hybrid electric vehicle, a plug-in hybrid electric vehicle and the like. In order to meet requirements of the electrical device for high power and high energy density of the secondary battery, a battery pack or a battery module can be adopted.

[Examples]

Hereinafter, embodiments of the present application will be described. The embodiments described below are exemplary only and should not be construed as limiting the present application. When specific techniques or conditions are not specified in the examples, they are performed according to techniques or conditions described in the literature in the art or according to the product description. The used reagents or instruments without indicating the manufacturer are common products that can be obtained commercially.

Example 1

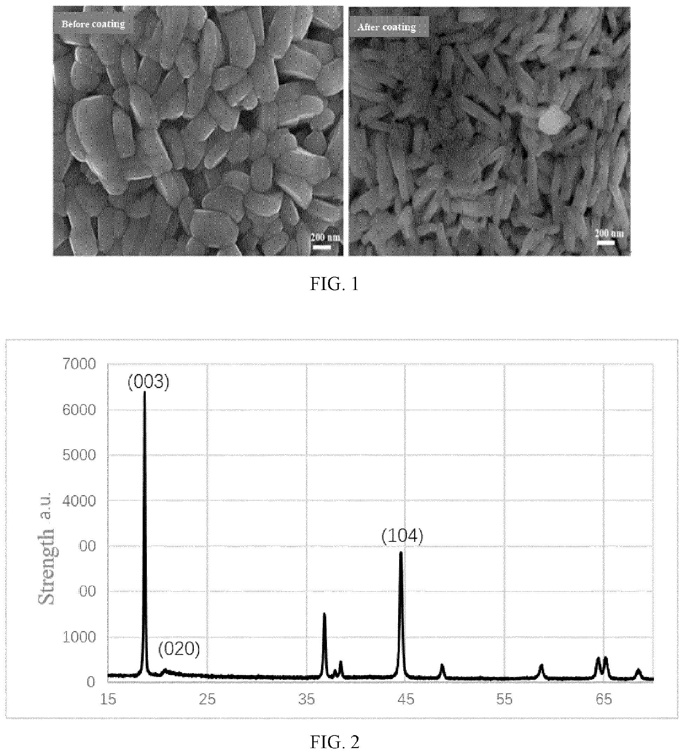

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 400°C for 4 hours, and then the furnace was raised to 900°C and maintained this temperature for 12 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ co-doped with Fe and Cl. SEM tests were respectively performed on the lithium-rich manganese-based positive electrode material co-doped with anion and cation prior to and subsequent to coating LATP. XRD tests were respectively performed on the lithium-rich manganese-based positive electrode material prior to and subsequent to co-doping with anion and cation. The test results are shown in FIG. 1 to FIG. 3.

Example 2

Embodiment 2 differs from Embodiment 1 is that the doping elements are changed, in which the anion element was F provided by lithium fluoride and the cation element was Na provided by sodium carbonate, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Na and F.

Example 3

Example 3 differs from Example 1 is that the doping elements were changed, in which the anion element was F provided by lithium fluoride and the cation element was Fe provided by iron oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Fe and F.

Example 4

Example 4 differs from Example 1 is that the doping elements were changed, in which the anion element was B provided by boric acid and the cation element was Fe provided by iron oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Fe and B.

Example 5

Example 5 differs from Example 1 is that the doping elements were changed, in which the anion element was P provided by ammonium dihydrogen phosphate and the cation element was Fe provided by iron oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Fe and P.

Example 6

Example 6 differs from Example 1 is that the doping elements were changed, in which the anion element was N provided by carbamide and the cation element was Fe provided by iron oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Fe and N.

Example 7

Example 7 differs from Example 1 is that the doping elements were changed, in which the anion element was Cl provided by ammonium chloride and the cation element was Na provided by sodium carbonate, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Na and Cl.

Example 8

Example 8 differs from Example 1 is that the doping elements were changed, in which the anion element was Cl provided by c and the cation element was Ti provided by titanium oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of

$0.35Li_2MnO_3 \cdot 0.65LiNi_{0.46}Co_{0.08}Mn_{0.46}O_2$ co-doped with Ti and Cl.

Example 9

Example 9 differs from Example 1 is that the doping elements were changed, in which the anion element was Cl provided by ammonium chloride and the cation element was Mg provided by magnesium oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot O.65LiNi_{0.46}Co_{0.08}Mn_{0.46}O_2$ co-doped with Mg and Cl.

Example 10

Example 10 differs from Example 1 is that the doping elements were changed, in which the anion element was Cl provided by ammonium chloride and the cation element was Nb provided by niobium oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Nb and Cl.

Example 11

Example 11 differs from Example 1 is that the doping elements were changed, in which the anion element was Cl provided by ammonium chloride and the cation element was Cr provided by chrome oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Cr and Cl.

Example 12

Example 12 differs from Example 1 is that the doping elements were changed, in which the anion element was Cl provided by ammonium chloride and the cation element was Er provided by erbium oxide, to obtain a modified lithium-rich manganese-based positive electrode material of $0.35Li_2MnO_3 \cdot 0.65LiNi_{0.46}Co_{0.08}Mn_{0.46}O_2$. LATP was attached to a surface of $0.35Li_2MnO_3 \cdot 0.65LiNi_{0.46}Co_{0.08}Mn_{0.46}O_2$ co-doped with Er and Cl.

Example 13

Example 13 differs from Example 1 is that the ratios of the doping elements were changed. The mass ratio of iron to the theoretical lithium-rich manganese-based material was 2000 ppm, the mass ratio of chlorine to the theoretical lithium-rich manganese-based material was 600 ppm, and M1/M2=1:0.3.

Example 14

Example 14 differs from Example 1 is that the ratios of the doping elements were changed. The mass ratio of iron to the theoretical lithium-rich manganese-based material was 2000 ppm, the mass ratio of chlorine to the theoretical lithium-rich manganese-based material was 4000 ppm, and M1/M2=1:2.

Example 15

Example 15 differs from Example 1 is that the ratios of the doping elements were changed. The mass ratio of iron to the theoretical lithium-rich manganese-based material was 2000 ppm, the mass ratio of chlorine to the theoretical lithium-rich manganese-based material was 1000 ppm, and M1/M2=1:0.5.

Example 16

Example 16 differs from Example 1 is that the ratios of the doping elements were changed. The mass ratio of iron to the theoretical lithium-rich manganese-based material was 2000 ppm, the mass ratio of chlorine to the theoretical lithium-rich manganese-based material was 3000 ppm, and M1/M2=1:1.5.

Example 17

Example 17 differs from Example 1 is that the amounts of doping elements were changed. The mass ratio of iron to the theoretical lithium-rich manganese-based material was 1000 ppm, the mass ratio of chlorine to the theoretical lithium-rich manganese-based material was 1000 ppm, and M1/M2=1:1.

Example 18

Example 18 differs from Example 1 is that the amounts of doping elements were changed. The mass ratio of iron to the theoretical lithium-rich manganese-based material was 10000 ppm, the mass ratio of chlorine to the theoretical lithium-rich manganese-based material was 10000 ppm, and M1/M2=1:1.

Example 19

Example 19 differs from Example 1 is that the amounts of doping elements were changed. The mass ratio of iron to the theoretical lithium-rich manganese-based material was 20000 ppm, the mass ratio of chlorine to the theoretical lithium-rich manganese-based material was 20000 ppm, and M1/M2=1:1.

Example 20

Example 20 differs from Example 1 is that the amounts and ratios of the doping elements were changed. The mass ratio of iron to the theoretical lithium-rich manganese-based material was 20000 ppm, the mass ratio of chlorine to the theoretical lithium-rich manganese-based material was 40000 ppm, and M1/M2=1:2.

Example 21

Example 21 differs from Example 1 is that the amounts of doping elements were changed. The mass ratio of iron to the theoretical lithium-rich manganese-based material was 25000 ppm, the mass ratio of chlorine to the theoretical lithium-rich manganese-based material was 25000 ppm, and M1/M2=1:1.

Example 22

Example 22 differs from Example 1 is that the amounts of doping elements were changed. The mass ratio of iron to the theoretical lithium-rich manganese-based material was 5000 ppm, the mass ratio of chlorine to the theoretical lithium-rich manganese-based material was 5000 ppm, and M1/M2=1:1.

Example 23

Example 23 differs from Example 1 is that the amounts of doping elements were changed. The mass ratio of iron to the theoretical lithium-rich manganese-based material was 25000 ppm, the mass ratio of chlorine to the theoretical lithium-rich manganese-based material was 25000 ppm, and M1/M2=1:1.

Example 24

Example 24 differs from Example 1 is that the amounts and ratios of the doping elements were changed. The mass ratio of iron to the theoretical lithium-rich manganese-based material was 25000 ppm, the mass ratio of chlorine to the theoretical lithium-rich manganese-based material was 1000 ppm, and M1/M2=1:0.04.

Example 25

Example 25 differs from Example 1 is that the amounts and ratios of the doping elements were changed. The mass ratio of iron to the theoretical lithium-rich manganese-based material was 25000 ppm, the mass ratio of chlorine to the theoretical lithium-rich manganese-based material was 50000 ppm, and M1/M2=1:2.

Example 26

Example 26 differs from Example 1 is that the amounts and ratios of the doping elements were changed. The mass ratio of iron to the theoretical lithium-rich manganese-based material was 2000 ppm, the mass ratio of chlorine to the theoretical lithium-rich manganese-based material was 5000 ppm, and M1/M2=1:2.5.

Example 27

Example 27 differs from Example 1 is that LAGP with the same weight was employed to replace LATP.

Example 28

Example 28 differs from Example 1 is that LLZO with the same weight was employed to replace LATP.

Example 29

Example 29 differs from Example 1 is that LLTO with the same weight was employed to replace LATP.

Example 30

Example 30 differs from Example 1 is that $LiPO_3$ with the same weight was employed to replace LATP.

Example 31

Example 31 differs from Example 1 is that the mass ratio of LATP to the lithium-rich manganese-based positive electrode material co-doped with anion and cation was 2000 ppm.

Example 32

Example 32 differs from Example 1 is that the mass ratio of LATP to the lithium-rich manganese-based positive electrode material co-doped with anion and cation was 20000 ppm.

Example 33

Example 33 differs from Example 1 is that the mass ratio of LATP to the lithium-rich manganese-based positive electrode material co-doped with anion and cation was 10000 ppm.

Example 34

Example 34 differs from Example 1 is that the mass ratio of LATP to the lithium-rich manganese-based positive electrode material co-doped with anion and cation was 1500 ppm.

Example 35

Example 35 differs from Example 1 is that the mass ratio of LATP to the lithium-rich manganese-based positive electrode material co-doped with anion and cation was 25000 ppm.

Example 36

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 600°C for 8 hours, and then the furnace was raised to 900°C and maintained this temperature for 12 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ co-doped with Fe and Cl.

Example 37

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 600°C for 8 hours, and then the furnace was raised to 800°C and maintained this temperature for 20 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ co-doped with Fe and Cl.

Example 38

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 600°C for 8 hours, and then the furnace was raised to 1000°C and maintained this temperature for 10 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ co-doped with Fe and Cl.

Example 39

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 600°C for 8 hours, and then the furnace was raised to 900°C and maintained this temperature for 12 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 500°C, and the sintering period was 8 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ co-doped with Fe and Cl.

Example 40

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 600°C for 8 hours, and then the furnace was raised to 900°C and maintained this temperature for 12 hours. The sintering atmosphere was air, and a lithium-rich manganese-based positive electrode material co-doped with anion and cation was obtained by sintering. The obtained lithium-rich manganese-based positive electrode material was mixed and sintered with LATP. A mass ratio of LATP to the lithium-rich manganese-based positive electrode material co-doped with anion and cation was 7000 ppm. The sintering temperature was 700°C, and the sintering period was 4 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of

$0.35Li_2MnO_3 \cdot 0.65LiNi_{0.46}Co_{0.08}Mn_{0.46}O_2$ co-doped with Fe and Cl.

Comparative Example 1

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, and a mass ratio of chlorine to the theoretical lithium-rich manganese-based material was 2000 ppm. The mixed material was put into a furnace for sintering at 400°C for 4 hours, and then the furnace was raised to 900°C and maintained this temperature for 12 hours. The sintering atmosphere was air, and a lithium-rich manganese-based positive electrode material doped with chloride ion was obtained by sintering. The obtained lithium-rich manganese-based positive electrode material doped with chloride ion was mixed and sintered with LATP. A mass ratio of LATP to the lithium-rich manganese-based positive electrode material doped with chloride ion was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ doped with chloride ion.

Comparative Example 2

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, and a mass ratio of iron to a theoretical lithium-rich manganese-based material was 2000 ppm. The mixed material was put into a furnace for sintering at 400°C for 4 hours, and then the furnace was raised to 900°C and maintained this temperature for 12 hours. The sintering atmosphere was air, and a lithium-rich manganese-based positive electrode material doped with iron ion was obtained by sintering. The obtained lithium-rich manganese-based positive electrode material doped with iron ion was mixed and sintered with LATP. A mass ratio of LATP to the lithium-rich manganese-based positive electrode material doped with iron ion was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$ doped with iron ion.

Comparative Example 3

A precursor $Ni_{0.3}Co_{0.05}Mn_{0.65}(OH)_2$, lithium carbonate, iron oxide and ammonium chloride were put into a plough mixer for mixing. Lithium carbonate and the precursor were weighed at a molar ratio of Li/Me (representing transition metals Ni, Co, and Mn) of 1.38, a mass ratio of iron to a theoretical lithium-rich manganese-based material was 2000 ppm, and a mass ratio of chlorine to the theoretical lithium-rich manganese-based material was 2000 ppm. The mixed material was put into a furnace for sintering at 400°C for 4 hours, and then the furnace was raised to 900°C and maintained this temperature for 12 hours. The sintering atmosphere was air, and a lithium-rich manganese-based positive electrode material co-doped with anion and cation was obtained by sintering.

Comparative Example 4

A precursor $Ni_{0.3}Co_{0.05}Mn_{0.65}(OH)_2$ and lithium carbonate were put into a plough mixer for mixing. Lithium carbonate and the precursor were weighed at a molar ratio of Li/Me (representing transition metals Ni, Co, and Mn) of 1.38. The mixed material was put into a furnace for sintering at 400°C for 4 hours, and then the furnace was raised to 900°C and maintained this temperature for 12 hours. The sintering atmosphere was air, and a lithium-rich manganese-based positive electrode material was obtained by sintering. The obtained lithium-rich manganese-based positive electrode material was mixed and sintered with LATP. A mass ratio of LATP to the lithium-rich manganese-based positive electrode material was 7000 ppm. The sintering temperature was 650°C, and the sintering period was 5 hours. Then a modified lithium-rich manganese-based positive electrode material of $0.35Li_2MnO_3 \cdot 0.65LiNi_{0.46}Co_{0.08}Mn_{0.46}O_2$ was obtained, that is, LATP was coated on a surface of $0.35Li_2MnO_3 \cdot 0.65LiNi_{0.46}Co_{0.08}Mn_{0.46}O_2$.

Comparative Example 5

A precursor $Ni_{0.3}Co_{0.05}Mn_{0.65}(OH)_2$ and lithium carbonate were put into a plough mixer for mixing. Lithium carbonate and the precursor were weighed at a molar ratio of Li/Me (representing transition metals Ni, Co, and Mn) of 1.38. The mixed material was put into a furnace for sintering at 400°C for 4 hours, and then the furnace was raised to 900°C and maintained this temperature for 12 hours. The sintering atmosphere was air, and a lithium-rich manganese-based positive electrode material was obtained by sintering.

Test Methods:

1. Performance test of the positive electrode active material

1) Particle size test of Dv50, Dv10 and Dv90
Referring to the GB/T 19077-2016 particle size distribution laser diffraction method, the particle sizes were conveniently measured by a laser particle size analyzer, such as an Mastersizer 2000E laser particle size analyzer of Malvern Instruments Co., Ltd. in the U K.

2) Measurement of specific surface area
Referring to GB/T 19587-2017, the specific surface area was measured by the nitrogen adsorption specific surface area analysis test method, and was calculated by the BET (Brunauer Emmett Teller) method. The nitrogen adsorption specific surface area analysis test may be carried out by a Tri-Star 3020 specific surface area aperture analysis tester from Micromeritics, USA.

3) The molecular structure of the core material may be measured by known methods. For example, an inductively coupled plasma optical emission spectrometer (ICP-AES) is used for testing.

4) Thickness test of primary particles on the surface of the positive electrode material
The thickness of the primary particles on the surface of the positive electrode material may be measured by a well-known method. A high-resolution electron microscope may be used to calibrate the thickness of the primary particles, which is then measured according to the length of the scale.

5) Test method for crystal parameters
The positive electrode material underwent XRD test and analysis. The scanning range 2 theta of the XRD was in a range of 10° to 80°, the scanning speed was smaller than or equal to 2°/min, and the step size was in a range of 0.2° to 0.02°. The obtained XRD spectrums were refined on a JADE software, and peak area values of the characteristic peaks 003, 104 and 002 of the positive electrode materials were calculated from the refined XRD spectrums.

6) Conductivity test method

The conductivity was measured by the well-known alternating-current impedance method. The positive material was pressed into a circular sheet with a diameter of 12.5 mm and a thickness in range of 2 mm to 3 mm, and then two surfaces of the circular sheet were respectively coated with a conductive silver slurry that is used as an electronic conductor and an ionic insulator. The frequency range of the alternating current impedance was from 1 MHz to 0.1 Hz, and the perturbation signal was 5 mV.
The testing results are recorded in Table 1.

Table 1

| | Mass content of the fast ionic conductor material | Conductivity ($\mu$S/cm) | Specific surface area ($m^2/g$) | Thickness of primary particles (nm) | Thickness of primary particles prior to coating (nm) | $(D_{v90}-D_{v10})/D_{v50}$ | Powder compacted density at a 5 tons pressure (g/cc) | Peak area ratio of I003/I104 | Peak area ratio of I020/(I003+I104) |
|---|---|---|---|---|---|---|---|---|---|
| Examples | | | | | | | | | |
| 1 | 7000 | -32 | 1.82 (1.52 before coating) | 200 | 350 | 1.21 | 3 | 1.08 | 0.01 |

(continued)

| | Mass content of the fast ionic conduct or material | Condu ctivity ($\mu$S/c m) | Specific surface area ($m^2$/g) | Thickness of primary particles (nm) | Thickne ss of primary particles prior to coating (nm) | $(D_{v90}-D_{v10})/D_{v50}$ | Powder compact ed density at a 5 tons pressure (g/cc) | Peak area ratio of I003/I1 04 | Peak area ratio of I020/ (I003 +I104 ) |
|---|---|---|---|---|---|---|---|---|---|
| Examples | | | | | | | | | |
| 2 | 7000 | 32 | 1.72 (1.45 before coating) | 250 | 465 | 1.21 | 3.2 | 1.07 | 0.012 |
| 3 | 7000 | 28 | 1.76 (1.46 before coating) | 260 | 452 | 1.23 | 3.1 | 1.06 | 0.012 |
| 4 | 7000 | 32 | 1.72 (1.42 before coating) | 180 | 435 | 1.18 | 3.15 | 1.05 | 0.009 |
| 5 | 7000 | 32 | 1.83 (1.56 before coating) | 170 | 325 | 1.26 | 3.1 | 1.05 | 0.015 |
| 6 | 7000 | 32 | 1.82 (1.48 before coating) | 240 | 365 | 1.28 | 3.05 | 1.06 | 0.013 |
| 7 | 7000 | 34 | 1.75 (1.62 before coating) | 230 | 330 | 1.26 | 3.13 | 1.12 | 0.014 |
| 8 | 7000 | 28 | 1.72 (1.52 before coating) | 280 | 456 | 1.24 | 3.1 | 1.13 | 0.017 |
| 9 | 7000 | 26 | 1.65 (1.32 before coating) | 265 | 382 | 1.23 | 3.05 | 1.12 | 0.009 |
| 10 | 7000 | 24 | 1.85 (1.45 before coating) | 260 | 365 | 1.25 | 3.13 | 1.08 | 0.008 |
| 11 | 7000 | 26 | 1.84 (1.43 before coating) | 245 | 450 | 1.23 | 3.04 | 1.08 | 0.013 |

(continued)

| | Mass content of the fast ionic conduct or material | Condu ctivity (μS/c m) | Specific surface area (m²/g) | Thickness of primary particles (nm) | Thickne ss of primary particles prior to coating (nm) | $(D_{v90}-D_{v10})/D_{v50}$ | Powder compact ed density at a 5 tons pressure (g/cc) | Peak area ratio of I003/I1 04 | Peak area ratio of I020/ (I003 +I1104 ) |
|---|---|---|---|---|---|---|---|---|---|
| Examples | | | | | | | | | |
| 12 | 7000 | 32 | 1.92 (1.56 before coating) | 235 | 365 | 1.21 | 3.05 | 1.06 | 0.011 |
| 13 | 7000 | 25 | 1.76 (1.52 before coating) | 246 | 345 | 1.23 | 3.01 | 1.12 | 0.012 |
| 14 | 7000 | 28 | 1.78 (1.58 before coating) | 178 | 223 | 1.26 | 3.15 | 1.13 | 0.018 |
| 15 | 7000 | 22 | 1.89 (1.46 before coating) | 180 | 230 | 1.18 | 3.06 | 1.12 | 0.02 |
| 16 | 7000 | 26 | 1.81 (1.42 before coating) | 196 | 256 | 1.25 | 3.12 | 1.08 | 0.015 |
| 17 | 7000 | 27 | 1.89 (1.52 before coating) | 220 | 450 | 1.23 | 3.06 | 1.08 | 0.012 |
| 18 | 7000 | 24 | 1.63 (1.32 before coating) | 210 | 358 | 1.18 | 3.12 | 1.06 | 0.012 |
| 19 | 7000 | 26 | 1.73 (1.35 before coating) | 230 | 365 | 1.17 | 3.15 | 1.12 | 0.015 |
| 20 | 7000 | 24 | 1.78 (1.45 before coating) | 220 | 450 | 1.22 | 3.14 | 1.08 | 0.02 |
| 21 | 7000 | 25 | 1.75 (1.35 before coating) | 210 | 368 | 1.26 | 3.12 | 1.13 | 0.015 |

(continued)

| | Mass content of the fast ionic conductor material | Conductivity ($\mu$S/cm) | Specific surface area ($m^2$/g) | Thickness of primary particles (nm) | Thickness of primary particles prior to coating (nm) | $(D_{v90}-D_{v10})/D_{v50}$ | Powder compacted density at a 5 tons pressure (g/cc) | Peak area ratio of I003/I104 | Peak area ratio of I020/(I003+I104) |
|---|---|---|---|---|---|---|---|---|---|
| Examples | | | | | | | | | |
| 22 | 7000 | 23 | 1.86 (1.46 before coating) | 180 | 256 | 1.24 | 3.08 | 1.14 | 0.018 |
| 23 | 7000 | 32 | 1.85 (1.45 before coating) | 150 | 269 | 1.23 | 3.07 | 1.08 | 0.035 |
| 24 | 7000 | 24 | 1.84 (1.44 before coating) | 160 | 278 | 1.17 | 3.08 | 1.13 | 0.025 |
| 25 | 7000 | 25 | 1.78 (1.38 before coating) | 265 | 456 | 1.18 | 3.15 | 1.12 | 0.028 |
| 26 | 7000 | 26 | 1.76 (1.46 before coating) | 246 | 452 | 1.18 | 3.12 | 1.09 | 0.023 |
| 27 | 7000 | 23 | 1.74 (1.43 before coating) | 232 | 432 | 1.23 | 3.09 | 1.08 | 0.011 |
| 28 | 7000 | 21 | 1.72 (1.46 before coating) | 189 | 368 | 1.19 | 3.08 | 1.07 | 0.013 |
| 29 | 7000 | 18 | 1.71 (1.52 before coating) | 186 | 367 | 1.2 | 3.06 | 1.05 | 0.018 |
| 30 | 7000 | 19 | 1.72 (1.48 before coating) | 175 | 275 | 1.18 | 3.12 | 1.12 | 0.012 |
| 31 | 2000 | 25 | 1.85 (1.32 before coating) | 258 | 358 | 1.25 | 3.13 | 1.13 | 0.015 |

(continued)

| | Mass content of the fast ionic conductor material | Conductivity (μS/cm) | Specific surface area (m²/g) | Thickness of primary particles (nm) | Thickness of primary particles prior to coating (nm) | $(D_{v90}-D_{v10})/D_{v50}$ | Powder compacted density at a 5 tons pressure (g/cc) | Peak area ratio of I003/I104 | Peak area ratio of I020/(I003+I104) |
|---|---|---|---|---|---|---|---|---|---|
| Examples | | | | | | | | | |
| 32 | 20000 | 36 | 1.86 (1.72 before coating) | 178 | 365 | 1.28 | 3.21 | 1.15 | 0.025 |
| 33 | 10000 | 32 | 1.78 (1.62 before coating) | 176 | 289 | 1.32 | 3.15 | 1.12 | 0.026 |
| 34 | 1500 | 12 | 1.74 (1.32 before coating) | 175 | 256 | 1.26 | 3.21 | 1.16 | 0.015 |
| 35 | 25000 | 13 | 1.68 (1.62 before coating) | 165 | 358 | 1.35 | 3.15 | 1.13 | 0.014 |
| 36 | 7000 | 25 | 1.72 (1.42 before coating) | 185 | 325 | 1.26 | 3.04 | 1.14 | 0.019 |
| 37 | 7000 | 26 | 1.78 (1.48 before coating) | 186 | 325 | 1.25 | 3.05 | 1.12 | 0.014 |
| 38 | 7000 | 28 | 1.74 (1.43 before coating) | 178 | 415 | 1.24 | 3.04 | 1.13 | 0.025 |
| 39 | 7000 | 26 | 1.86 (1.52 before coating) | 189 | 350 | 1.23 | 3.03 | 1.12 | 0.018 |
| 40 | 7000 | 25 | 1.82 (1.51 before coating) | 220 | 353 | 1.18 | 3.02 | 1.15 | 0.017 |
| Comparative Examples | | | | | | | | | |
| 1 | 7000 | 15 | 1.84 (1.49 before coating) | 230 | 456 | 1.25 | 2.75 | 0.85 | 0.08 |

(continued)

| Comparative Examples | | | | | | | | | |
|---|---|---|---|---|---|---|---|---|---|
| 2 | 7000 | 18 | 1.82 (1.52 before coating) | 245 | 468 | 1.23 | 2.65 | 0.85 | 0.09 |
| 3 | 0 | 7 | 1.86 | / | 489 | 1.12 | 2.55 | 0.76 | 0.06 |
| 4 | 7000 | 14 | 1.86 (1.55 before coating) | 232 | 475 | 1.16 | 2.82 | 0.73 | 0.06 |
| 5 | 0 | 4 | 1.87 | / | 456 | 1.13 | 2.65 | 0.75 | 0.07 |

Production Method of Soft Pack Battery

The lithium-rich manganese-based positive electrode material finally synthesized in each of Examples or Comparative Examples was used as a positive electrode active material, and was mixed with a conductive agent of acetylene black, a binder of polyvinylidene fluoride (PVDF) at a weight ratio of 96:2:2 in a solvent system of N-methyl pyrrolidone by stirring sufficiently and mixing uniformly. The mixture was then coated on an aluminum foil, dried, and cold pressed, to obtain a positive electrode plate. The negative electrode active material of artificial graphite, hard carbon, the conductive agent of acetylene black, a binder of styrene-butadiene rubber (SBR), and a thickening agent of sodium carbon methyl cellulose (CMC) were stirred sufficiently to be mixed uniformly at a weight ratio of 90: 5: 2: 2: 1 in the solvent system of deionized water. The obtained mixture was then coated in a copper foil, dried, and cold pressed, to obtain a negative electrode plate. A PE porous polymerized film was used as a separator. The positive electrode plate, the separator and the negative electrode plate were stacked sequentially, allowing the separator to be located between the positive electrode and the negative electrode to provide an isolation function. The positive electrode plate, the separator and the negative electrode plate were then wound to obtain a bare cell. The bare cell was placed in an outer package, injected with a prepared base electrolytic solution. The base electrolytic solution was an EC/DMC (at a volume ratio 1:1) solution with a $LiPF_6$ concentration of 1.0 mol/L, and was encapsulated to obtain a full battery.

2. Battery Performance Evaluation

1) First-cycle Discharge Efficiency

A soft pack battery that has been filled with a liquid was charged to 3.4 V at a constant current of 0.02 C and at 45°C, stood for 5 min, was then charged to 3.75 V at a constant current of 0.1 C, and the capacity was recorded as Z1. Thereafter exhausting and second sealing were carried out. The second-sealed battery was placed at 25°C, was charged to 4.5 V at a constant current of 0.33 C, was then charged to 0.02 C at a constant voltage and stood for 5 min, and the capacity was recorded as Z2. The battery was then discharged to 2.0 V at 0.33 C, and the capacity was recorded as D1.

An equation for calculating the first-cycle efficiency is as follows:

$$\text{First-cycle efficiency} = D1/(Z1+Z2).$$

2) Discharge Capacity Test

In a constant temperature environment of 25°C and at a voltage in a range of 2.0 V to 4.5 V, the battery was charged to 4.5 V at 0.33 C, was then charged to a current of 0.05 C at a constant voltage of 4.5 V, and stood for 5 minutes. After that, the battery was discharged to 2.0 V at 0.33 C, and the specific capacity results of the lithium-ion battery with a discharge rate of 0.33 C were recorded. The battery stood for 5 minutes, was charged to 4.5 V at 0.33 C. Thereafter the battery was charged at a constant voltage of 4.5 V until the current reached 0.05 C, and stood for 5 minutes. The battery was then discharged to 2.0 V at 0.5 C, and the specific capacity results of the lithium-ion battery with a discharge rate of 0.5 C were recorded.

3) Cycle Performance Test

The first charge and discharge were performed in a constant temperature environment of 25°C, and constant-current and constant-voltage charging was performed (charge to a current of 0.05 C) at a charging current of 0.5 C, that is, the current value that had a theoretical capacity and was completely discharged within 2 hours, until an upper limit voltage reached 4.46 V After standing for 5 minutes, the battery was discharged at a constant discharge current of 0.5 C until the final voltage was 2.3 V The discharge capacity of the first cycle was recorded, and continuous charge and discharge cycles were then performed.

$$\text{Capacity retention of nth cycle} = (\text{discharge capacity of nth cycle}/\text{discharge capacity of first cycle}) \times 100\%.$$

The results are recorded in Table 2.

Table 2

|  | First-cycle discharge efficiency /% | Discharge capacity at 0.33 C /mAh/g | Discharge capacity at 0.5 C /mAh/g | Capacity retention for full power cycle 500cls at 25°C /% |
|---|---|---|---|---|
| Examples | | | | |
| 1 | 90.2 | 235.6 | 225.6 | 95.6 |
| 2 | 90.5 | 232.5 | 222.3 | 94.3 |
| 3 | 88.5 | 228.6 | 218.6 | 92.3 |
| 4 | 86.3 | 225.4 | 215.3 | 91.3 |
| 5 | 85.2 | 225.6 | 215.3 | 91.5 |
| 6 | 85.6 | 224.2 | 214.5 | 92.6 |
| 7 | 88.5 | 223.3 | 213.2 | 91.3 |
| 8 | 86.7 | 225.3 | 215.4 | 91.2 |
| 9 | 84.3 | 228.6 | 218.6 | 90.2 |
| 10 | 86.2 | 227.3 | 216.5 | 90.3 |
| 11 | 85.3 | 230.6 | 218.6 | 91.2 |
| 12 | 87.6 | 220.5 | 210.3 | 90.3 |
| 13 | 82.3 | 217.3 | 207.6 | 87.3 |
| 14 | 84.5 | 220.3 | 210.3 | 86.4 |
| 15 | 83.6 | 217.8 | 207.3 | 87.6 |
| 16 | 85.6 | 218.3 | 209.2 | 85.4 |
| 17 | 85.6 | 218.2 | 208.4 | 85.6 |
| 18 | 83.6 | 216.5 | 206.3 | 85.7 |
| 19 | 80.3 | 212.2 | 202.4 | 86.2 |
| 20 | 80.6 | 213.2 | 203.6 | 84.3 |
| 21 | 81.2 | 214.3 | 204.8 | 82.6 |
| 22 | 83.4 | 216.5 | 207.5 | 86.2 |
| 23 | 79.8 | 205.6 | 196.8 | 80.2 |
| 24 | 78.3 | 206.5 | 194.2 | 79.8 |
| 25 | 79.6 | 208.3 | 198.5 | 78.2 |

(continued)

| | First-cycle discharge efficiency /% | Discharge capacity at 0.33 C /mAh/g | Discharge capacity at 0.5 C /mAh/g | Capacity retention for full power cycle 500cls at 25°C /% |
|---|---|---|---|---|
| Examples | | | | |
| 26 | 79.5 | 206.9 | 196.2 | 80.3 |
| 27 | 84.2 | 218.2 | 208.5 | 87.6 |
| 28 | 86.3 | 214.6 | 205.6 | 86.2 |
| 29 | 85.6 | 215.2 | 204.3 | 87.3 |
| 30 | 85.2 | 216.3 | 206.5 | 85.6 |
| 31 | 84.5 | 215.3 | 205.4 | 87.8 |
| 32 | 85.6 | 224.3 | 213.2 | 89.8 |
| 33 | 87.6 | 220.5 | 213.3 | 90.2 |
| 34 | 84.3 | 208.3 | 198.2 | 80.2 |
| 35 | 83.2 | 205.6 | 193.5 | 79.8 |
| 36 | 85.6 | 216.8 | 205.8 | 87.3 |
| 37 | 84.3 | 218.5 | 208.5 | 88.6 |
| 38 | 83.2 | 210.6 | 200.3 | 82.3 |
| 39 | 84.5 | 217.5 | 206.5 | 88.3 |
| 40 | 87.2 | 216.6 | 205.6 | 86.9 |
| Comparative Examples | | | | |
| 1 | 80.1 | 198.5 | 188.5 | 75.2 |
| 2 | 82.3 | 197.6 | 186.5 | 76.3 |
| 3 | 80.1 | 200.2 | 190.2 | 73.2 |
| 4 | 80.3 | 195.6 | 185.3 | -- |
| 5 | 80.2 | 185.6 | 176.5 | 68.5 |

It was found through comparison that Fe and Cl, Na and F significantly improved the first efficiency and cycle performance of the material. When the amounts and ratios of doping elements exceeded the range, the material performance was reduced significantly. This was mainly because the doping amount and ratio were too small, such that it was difficult to achieve the desired effect. Further, the too high doping amount and ratio of the doping elements made the doping elements to be difficult to be doped into the material, but left in the surface layer, forming impurity phase and thus affecting performance. A suitable fast ionic conductor material coating and a suitable coating amount can effectively improve the ion conducting rate of the material. Too much or too little coating amount may lead to decrease in the ion conducting rate of the material. In addition, different sintering systems may lead to differences in the crystallinity of the material, which affects the performance of the material. Compared with samples without coating and doping, the material of the present disclosure has excellent first efficiency, rate performance, and cycle performance.

While the present disclosure has been described with reference to preferred embodiments, various modifications may be made and equivalents may be substituted for components thereof without departing from the scope of the present disclosure. In particular, the technical features mentioned in the various embodiments may be combined in any manner as long as there are no structural conflicts. The present disclosure is not limited to the particular embodiments disclosed herein, but includes all technical solutions falling within the scope of the claims.

**Claims**

1. A modified lithium-rich manganese-based material, comprising:

a lithium-rich manganese-based material co-doped with anion and cation, the lithium-rich manganese-based material having a chemical formula of $xLi_2MnO_3\bullet(1-x)LiNi_yCo_zMn_aO_2$, where $0<x<1$, $0\leq y\leq1$, $0\leq z\leq1$, and $y+z+a=1$; and

a fast ionic conductor material attached to the lithium-rich manganese-based material co-doped with anion and cation, the fast ionic conductor material being selected from at least one of a group consisting of LATP, LAGP, LLZO, LLTO, $LiBO_2$, $LiAlO_2$, and $LiPO_3$,

wherein the doped cation element M1 is selected from at least one of a group consisting of Na, Fe, Nb, Ti, Mg, Al, Cr, and Er, and the doped anion element M2 is selected from at least one of a group consisting of F, Cl, Br, I, S, B, P, N, Se, and Te.

2. The modified lithium-rich manganese-based material according to claim 1, wherein a doping amount of the doped cation element M1/a doping amount of the doped anion element M2 is 1:(0.3~2), optionally 1:(0.5-1.5); and optionally, when the doped cation element M1 is Fe, the doped anion element M2 is Cl; or when the doped cation element M1 is Na, the doped anion element M2 is F.

3. The modified lithium-rich manganese-based material according to claim 1 or 2, wherein the doping amount of the doped cation element M1 is in a range of 1000 ppm to 20000 ppm, optionally 2000 ppm to 10000 ppm; and the doping amount of the doped anion element M2 is in a range of 300 ppm to 40000 ppm, optionally 1000 ppm to 20000 ppm.

4. The modified lithium-rich manganese-based material according to any one of claims 1 to 3, wherein a weight content of the fast ionic conductor material in the modified lithium-rich manganese-based material is in a range of 2000 ppm to 20000 ppm, optionally 2000 ppm to 10000 ppm.

5. The modified lithium-rich manganese-based material according to any one of claims 1 to 4, wherein the modified lithium-rich manganese-based material has a conductivity in a range of 10 $\mu$S/cm to 60 $\mu$S/cm, preferably 30 $\mu$S/cm to 60 $\mu$S/cm.

6. The modified lithium-rich manganese-based material according to any one of claims 1 to 5, wherein the modified lithium-rich manganese-based material has a specific surface area smaller than 3.2 $m^2$/g, optionally in a range of 0.3 $m^2$/g to 2.2 $m^2$/g; and optionally, primary particles of the modified lithium-rich manganese-based material have a thickness in a range of 100 nm to 300 nm.

7. The modified lithium-rich manganese-based material according to any one of claims 1 to 6, wherein a volume particle size distribution diameter of the modified lithium-rich manganese-based material satisfies $(D_{v90}-D_{v10})/D_{v50}\geq1.1$, optionally satisfying $(D_{v90}-D_{v10})/D_{v50}\geq1.2$; and optionally, a powder compacted density of the modified lithium-rich manganese-based material at a pressure of 5 tons is greater than or equal to 3.0 g/cc.

8. The modified lithium-rich manganese-based material according to any one of claims 1 to 7, wherein in an X-ray diffraction spectrum of the modified lithium-rich manganese-based material, a peak area ratio of I003/I104 is in a range of 1.0 to 1.2, optionally 1.05 to 1.15; a peak area ratio of I020/(I003+I104) is in a range of 0.005 to 0.05, optionally 0.008 to 0.02; and optionally, a 003 characteristic peak and a 104 characteristic peak of the modified lithium-rich manganese-based material are shifted to left relative to a -003 characteristic peak and a 104 characteristic peak of the lithium-rich manganese-based material.

9. A modification method of a lithium-rich manganese-based material, comprising:

obtaining a lithium-rich manganese-based material co-doped with anion and cation by performing a first sintering on a first mixture, the first mixture comprising a lithium-rich manganese-based precursor, a lithium salt, a substance containing a cation element M1, and a substance containing an anion element M2, and the lithium-rich manganese-based material having a chemical formula of $xLi_2MnO_3\bullet(1-x)LiNi_yCo_zMn_aO_2$, where $0<x<1$, $0\leq y\leq1$, $0\leq z\leq1$, and $y+z+a=1$; and

obtaining a modified lithium-rich manganese-based material by performing a second sintering on a second mixture, the second mixture comprising a fast ionic conductor material and the lithium-rich manganese-based material co-doped with anion and cation, and the modified lithium-rich manganese-based material comprising the lithium-rich manganese-based material co-doped with anion and cation and the fast ionic conductor material, wherein the cation element M1 is selected from at least one of a group consisting of Na, Fe, Nb, Ti, Mg, Al, Cr, and Er, the anion element M2 being selected from at least one of a group consisting of F, Cl, Br, I, S, B, P, N, Se, and Te, and a mass ratio of the cation element M1 to the anion element M2 being 1:(0.3~2); and

wherein the fast ionic conductor material is selected from at least one of a group consisting of LATP, LAGP, LLZO, LLTO, $LiBO_2$, $LiAlO_2$, and $LiPO_3$.

10. The modification method according to claim 9, wherein the lithium-rich manganese-based precursor has a chemical formula of $Ni_bCo_cMn_{1-b-c}(OH)_2$, where $0.05 \geq c \geq 0$ and $0.4 \geq b > 0$;

optionally, the lithium salt is at least one of lithium hydroxide, lithium carbonate, or lithium acetate; and optionally, a molar ratio of a sum of transition metal elements in the lithium-rich manganese-based precursor to lithium of the lithium salt is 1:(1.1~1.8), preferably 1:(1.1~1.5).

11. The modification method according to claim 9 or 10, wherein the substance containing the cation element M1 is an oxide of M1 or a salt of M1;

optionally, the substance containing the anion element M2 is a monomer, a salt, or an organic substance; optionally, a mass ratio of the cation element M1 of the substance containing the cation element M1 relative to the lithium-rich manganese-based material is in a range of 1000 ppm to 20000 ppm, and further optionally 2000 ppm to 10000 ppm;
optionally, a mass ratio of the anion element M2 of the substance containing the anion element M2 relative to the lithium-rich manganese-based material is in a range of 300 ppm to 40000 ppm, and further optionally 1000 ppm to 20000 ppm; and
optionally, a mass ratio of the fast ionic conductor relative to the lithium-rich manganese-based material co-doped with anion and cation is in a range of 2000 ppm to 20000 ppm, optionally 2000 ppm to 10000 ppm.

12. The modification method according to any one of claims 9 to 11, wherein the first sintering comprises a first-stage sintering process and a second-stage sintering process;

a sintering temperature of the first-stage sintering process is in a range of 400°C to 600°C, a heat preservation time is in a range of 4 h to 8 h; and
a sintering temperature of the second-stage sintering process is in a range of 800°C to 1000°C, a heat preservation time is in a range of 10 h to 20 h.

13. The modification method according to any one of claims 9 to 12, wherein in the second sintering, a sintering temperature is in a range of 500°C to 700°C, a heat preservation time is in a range of 4 h to 8 h.

14. A secondary battery, comprising:

a positive electrode plate comprising a positive electrode film layer, the positive electrode film layer comprising a positive electrode active material;
a separator; and
a negative electrode plate,
wherein the positive electrode active material comprises the modified lithium-rich manganese-based material according to any one of claims 1 to 8 or the modified lithium-rich manganese-based material obtained by the modification method according to any one of claims 9 to 13.

15. An electrical device, comprising the secondary battery according to claim 14.

FIG. 1

FIG. 2

FIG. 3

FIG. 4

<u>5</u>

53

52

52

51

FIG. 5

<u>4</u>

5

5

5

FIG. 6

EP 4 358 182 A1

FIG. 7

FIG. 8

FIG. 9

## INTERNATIONAL SEARCH REPORT

| International application No. |
| --- |
| **PCT/CN2022/109450** |

| | |
| --- | --- |
| **A.** | **CLASSIFICATION OF SUBJECT MATTER** |
| | H01M4/36(2006.01)i;H01M4/525(2010.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC:H01M

Documentation searched other than minimum documentation to the extent that such documents are included in the fields searched

Electronic data base consulted during the international search (name of data base and, where practicable, search terms used)

    CNABS; CNTXT; VEN; ENTXT; CNKI; Web of Science: 富锂, 快离子导体, 包覆, 壳, 修饰, 掺杂, 阴离子, 阳离子, LATP, LAGP, LLZO, LLTO, LiBO2, LiAlO2, LiPO3, lithium rich, fast ion conductor, coat, shell, modification, dope, anion, cation

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | SHU, Wei et al. "Boosting the Electrochemical Performance of Li1.2Ni0.13Co0.13Mn0.54O2 by Rough Coating with the Superionic Conductor Li7La3Zr2O12" *ACS APPLIED MATERIALS & INTERFACES,* Vol. 13, No. 46, 24 November 2021 (2021-11-24), ISSN: 1944-8244, <br>    page 54917, left column, paragraph 3 to right column, paragraph 3 | 1-15 |
| Y | CN 111370686 A (KUNMING UNIVERSITY OF SCIENCE AND TECHNOLOGY et al.) 03 July 2020 (2020-07-03) <br>    description, paragraphs 2-84 | 1-15 |
| Y | HUANG, Xinping et al. "Effects of chromium/fluorine co-doping on the electrochemical performance of Li1.2Ni0.13Co0.13Mn0.54O2 cathode material for lithium-ion batteries" *Journal of Materials Science,* Vol. 56, No. 16, 23 February 2021 (2021-02-23), ISSN: 0022-2461, <br>    page 9837, left column, paragraph 1 to page 9839, left column, paragraph 1 | 1-15 |
| Y | CN 103943842 A (JIANGNAN UNIVERSITY) 23 July 2014 (2014-07-23) <br>    description, paragraphs 3-25 | 1-15 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 April 2023** | **23 April 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/109450** |

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113097475 A (SHANGHAITECH UNIVERSITY) 09 July 2021 (2021-07-09) description, paragraphs 3-65 | 1-15 |
| Y | ZHANG, Hongzhou et al. "Enhanced electrochemical performance of Li1.2Ni0.13Co0.13Mn0.54O2 by surface modification with the fast lithium-ion conductor Li-La-Ti-O" *Joural of Power Sources,* Vol. 364, 01 October 2017 (2017-10-01), ISSN: 0378-7753, page 272, right column, paragraph 1 to page 273, right column, paragraph 4 | 1-15 |
| A | CN 109406554 A (SINGULAR (BEIJING) TECHNOLOGY CO., LTD.) 01 March 2019 (2019-03-01) entire document | 1-15 |
| A | US 2020058933 A1 (APPLE INC.) 20 February 2020 (2020-02-20) entire document | 1-15 |

Form PCT/ISA/210 (second sheet) (July 2022)

INTERNATIONAL SEARCH REPORT
Information on patent family members

International application No.

**PCT/CN2022/109450**

| Patent document cited in search report | | | Publication date (day/month/year) | Patent family member(s) | | | Publication date (day/month/year) |
|---|---|---|---|---|---|---|---|
| CN | 111370686 | A | 03 July 2020 | None | | | |
| CN | 103943842 | A | 23 July 2014 | None | | | |
| CN | 113097475 | A | 09 July 2021 | None | | | |
| CN | 109406554 | A | 01 March 2019 | None | | | |
| US | 2020058933 | A1 | 20 February 2020 | US | 2021043926 | A9 | 11 February 2021 |

Form PCT/ISA/210 (patent family annex) (July 2022)